# EUROPEAN PATENT APPLICATION

(11) **EP 1 770 557 A1**
(43) Date of publication of application: **04.04.2007**
(21) Application number: 06253243.7
(22) Date of filing: 22.06.2006
(51) Int. Cl.: G06F 17/30, H04L 12/58

(54) **A method for accessing data and a method for searching data**

(30) Priority: 01.09.2005 CN 200510098249
(71) Applicant: ACER INCORPORATED, Taipei Hsien 221 (TW)
(72) Inventor: Chen, Tse-Min, Hsichih Taipei Hsien 221 (TW); Chen, Liang-Chen, Hsichih Taipei Hsien 221 (TW); Huang, Bo-Yuan, Hsichih,Taipei Hsien 221 (TW); Fang, Ding-Yu, Hsichih Tapei Hsien 221 (TW); Wei, Jr-Rung, Hsichih Tapei Hsien 221 (TW)
(74) Representative: Alexander, Thomas Bruce

(57) **Abstract**

A method for accessing data is disclosed, which method is for accessing data to a plurality of storage medias through an electronic communication device (102), wherein the storage medias are electrically connected to a gateway (108), the method including the steps of: the electronic communication device (102) being connected to the gateway (108) in a wireless manner; the electronic communication device (102) selecting a file type of the data to be accessed and sending the file type to the gateway (108); the gateway (108) searching, according to the file type, for the data in the storage media, which data matches with data to be accessed; and the gateway sending the matching data to the electronic communication device (102).

## Description

The invention relates to a method for accessing data, and more particularly, to a method for accessing data, which method can reduce a number of servers and can increase safety, to a method for searching data and to a message box.

With the fast development of the mobile phone and internet, the present mobile phones not only can make a phone call and answer the phone call, but also have functions of being connected to the internet through General Packet Radio Service (GPRS). Therefore, users of the communication device usually use the GPRS to connect to the Internet, to search for data, and even to send and receive e-mails and so on.

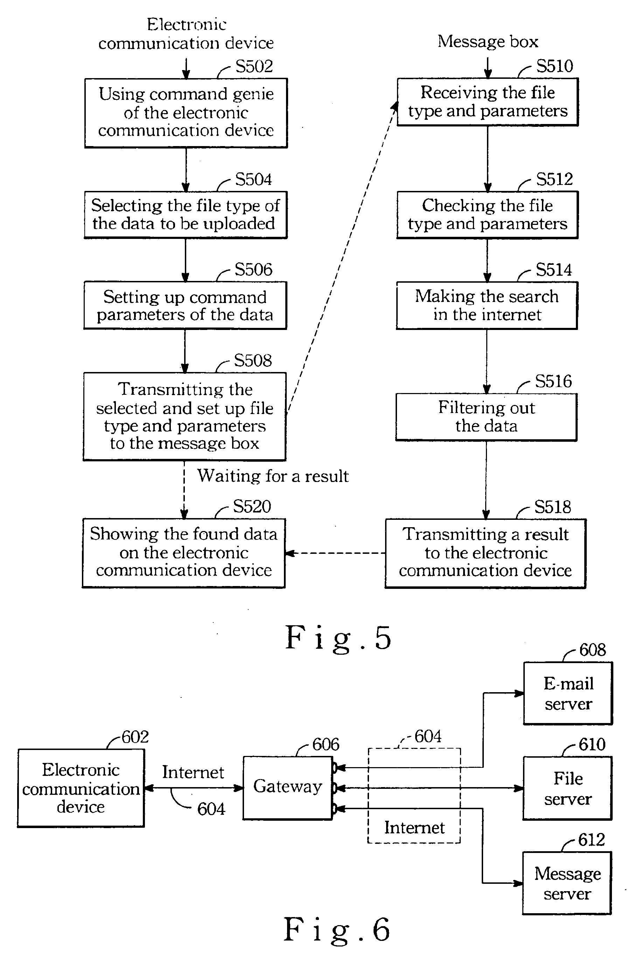

Please refer to Fig.6, which shows the system schematic drawing of data transmission in the prior art. In the prior art, the system schematic drawing of the data transmission in the prior art includes: an electronic communication device 602, an internet 604, a gateway 606, an e-mail server 608, a file server 610, and a message server 612, wherein the gateway 606 is electrically coupled, through the internet 604, to the e-mail server 608, the file server 610 and the message server 612, and the electronic communication device 602 is first connected, through for example the GPRS, to a telecommunication service provider, and is electrically coupled to the gateway 606 through the internet 604.

In Fig.6, the gateway 606 will receive the data from the e-mail server 608, the file server 610 and the message server 612, then will filter out the data that is going to be sent to the electronic communication device 602, or will duplicate the data, and will wait for a request signal from the electronic communication device 602. Under such an arrangement and system, a plurality of users of the electronic communication device 602 can be provided with service, but in contrast, the number of the servers must be increased, and repair and maintenance engineers must be also increased. In addition, because the data of the user is distributed over the servers in the Internet, the safety of the data can be a big problem.

When storage devices having big capacity are getting cheaper and cheaper, and transmission bandwidth to the internet is also getting wider and wider, then a compact system can be established to provide more functions than the transitional transmission systems do.

It is an object of the present invention to provide a method for accessing data, a method for searching data and a message box, which can make a user use his electronic communication device to access data without leakage of the data.

To achieve aforesaid objects, the method for accessing data of the present invention is applied to accessing data to a plurality of storage medias through the electronic communication device, and the storage medias are electrically coupled to a gateway. The method for accessing data includes the steps of: the electronic communication device being connected to the gateway in a wireless manner; the electronic communication device selecting a file type of the data to be accessed; the electronic communication device sending the file type to the gateway; the gateway searching, according to the file type, for the data in the storage media, which data matches with data to be accessed; and the gateway sending the matching data to the electronic communication device.

The method for accessing data further comprises the steps of: selecting the file type through the electronic communication device; the electronic communication device sending the data and the file type to the gateway; the gateway selecting, according to the file type, one of the storage medias, which will store the data, and renewing an data index; the gateway storing the data into one of the storage medias, which stores the data; and the gateway sending the storing result to the electronic communication device.

In the method for accessing data of the present invention, the steps of selecting the file type through the electronic communication device comprises the steps of setting up at least one of a plurality of parameters of the data.

In the method for accessing data of the present invention, the wireless manner includes a General Packet Radio Service (GPRS), Bluetooth or infrared, which make the electronic communication device connect to the gateway.

In the method for accessing data of the present invention, making the electronic communication device connect to the gateway through the GPRS comprises the steps of: the electronic communication device being connected to a media server through an internet; the electronic communication device downloading a present internet protocol address (IP address) of the gateway from the media server; the electronic communication device being connected to the gateway according to the present IP address.

In the method for accessing data of the present invention, the media server stores a unique identification code of the gateway, and the electronic communication device downloads the present IP address according to the unique identification code.

In the method for accessing data of the present invention, when the gateway is connected to the Internet, then the present Internet protocol address in the media server is renewed.

To achieve aforesaid objects, the method for searching data of the present invention is used to search for data in the Internet through the electronic communication device. Such a method for searching data comprises the steps of: the electronic communication device being connected to a gateway in a wireless manner; the electronic communication device selecting the file type of data to be searched; the electronic communication device sending the file type to the gateway; the gateway searching, according to the file type, for relating data in the internet; after that, the gateway sending the relating data to the electronic communication device.

In the method for searching data of the present invention, the gateway sending the relating data that is searched, to the electronic communication includes the steps of: matching and filtering out the relating data that is searched.

In the method for searching data of the present invention, the electronic communication device selecting the file type of the data includes the steps of: setting up at least one of the plurality of the parameters of the data.

To achieve the aforesaid objects, the message box disclosed in the present invention is connected to the Internet through a modem. Such a message box includes a data system module, a file system module, an account number management module, and a search service module. The data system module is used to receive, send and filter a plurality of data, and then sends the data to the electronic communication device. The file system module is used to store the plurality of data into the storage media. The account number management module is used to store a plurality of account passwords to judge grade of the authorized right of the user that is connected to the message box. The search service module is used to receive, access and search, according to a command of the electronic communication device, in the Internet through the file system module.

In the message box of the present invention, the command is the file type of the data to be accessed.

The message box of the present invention further includes a communication contact module, a calendar module and operation system module. The communication contact module has data of a plurality of contact persons. The calendar module is used to store a plurality of notes of the user. The operation system is used to store and execute the operation system that makes the message box operate.

The present invention will now be specified with reference to its preferred embodiment illustrated in the drawings, in which:

FIG.1 is a system schematic drawing of data transmission system of the present invention;

FIG.2 is a block diagram of an electrical circuit of a message box of the present invention;

FIG.3 is a function block diagram of the message box of the present invention;

FIG.4 is a flowchart of a method for accessing data of the present invention;

Fig.5 is a flowchart of a method for searching data of the present invention; and

Fig.6 is a system schematic drawing of data transmission system in the prior art.

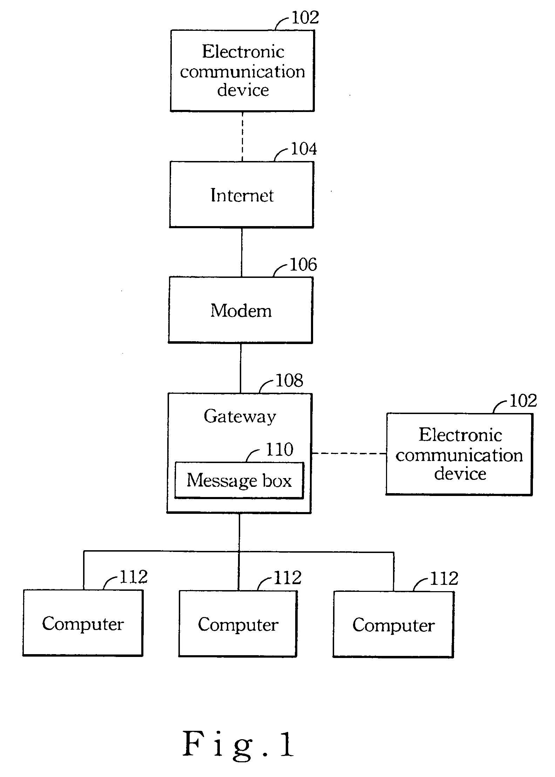

Please refer to Fig.1, which shows a system schematic drawing of data transmission system of the present invention. In a preferred embodiment of the present invention, the data transmission system of the present invention includes: an electronic communication device 102, an internet 104, a modem 106, a gateway 108 and a plurality of computers 112, wherein the electronic communication device 102 is connected to the gateway 108 in a manner that is the GPRS, Bluetooth, and infrared. The electronic communication device 102 is connected, through a telecommunication service provider, to the Internet 104 through via the GPRS, and then is connected to the gateway 108 through the modem 106, and the way of how the electronic communication device 102 finds the gateway 108 in the Internet will be explained in the following embodiment. Moreover, when the electronic communication device 102 is very close to the gateway 108, then the short distance Bluetooth or infrared is used to make the electronic communication device 102 connect to the gateway 108.

In the preferred embodiment of the present invention, the gateway 108 can be a gateway for home use, and the plurality of computers 112 can be storage medias that are built-in the gateway 108, can be storage medias that are externally connected to the gateway 108, or can be computers that are connected to the gateway 108.

In Fig.1, the gateway 108 includes a message box 110. The message box makes the electronic communication device 102 access data to the computers 112, or to the storage media of the gateway 108, and can search for data in the Internet through the gateway 108.

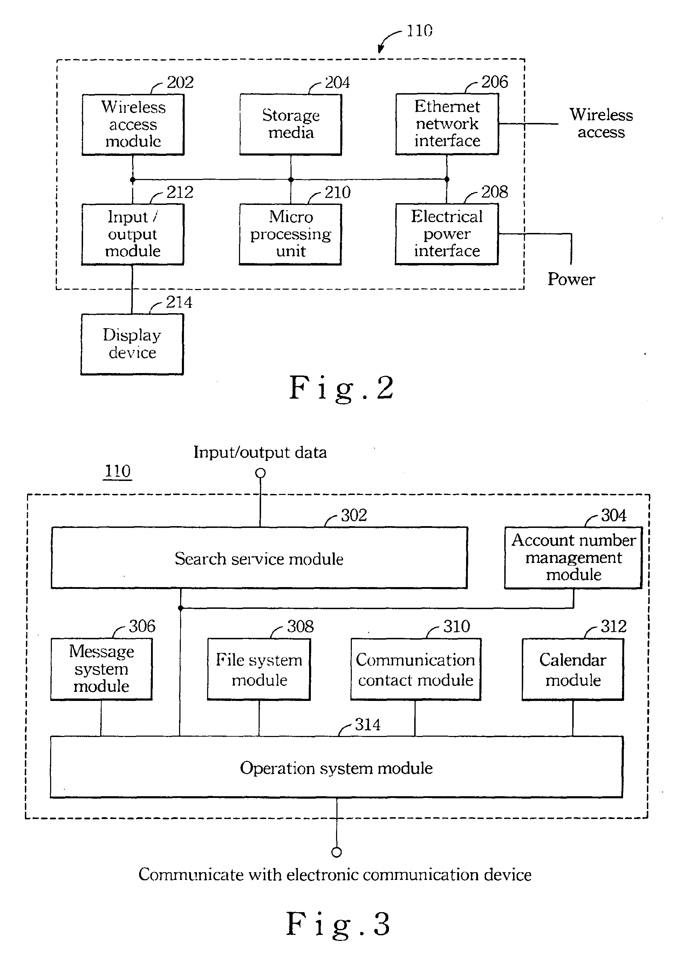

Please refer to Fig.2, which shows a circuit diagram of the message box of the present invention. Hardware of the message box includes a wireless access module 202, a storage media 204, an Ethernet network interface 206, and an electrical power interface 208 and a micro processing unit 210 (MPU), and an input/output module 212. The message box 110 is electrically coupled to a display device 214.

In the preferred embodiment, the wireless access module 202 can be for example, a Bluetooth module or infrared module, and even an input/output module of network, but is not limited hereof.

The storage media 204 can be for example, a hard disc or storable media that is built-in the gateway 108, or can be for example, a hard disc that is externally connected to the gateway 108.

The Ethernet network interface 206 can be an input/output interface of the Ethernet, and is used to communicate with the computers 112 or the electronic communication device 102 through the Internet.

The electric power interface 208 can provide power to internal elements of the message box 110, the MPU 210 is used to control operations of the internal elements of the message box 110 and execute various commands, and the input/output module 212 can be for example, connected to the display device 214, or a light emitting diode (LED), a speaker, and input devices, such as keyboard, mouse, and so on..

Please refer to Fig.3, which shows a function block diagram of the message box, wherein the function of the message box 110 is one of important keys, which can achieve the objects of the present invention.

In the present embodiment, the function modules of the message box 110 include a search service module 302, an account number management module 304, a message system module 306, a file system module 308, a communication contact module 310, a calendar module 312, and an operation system module 314.

The search service module 302 is used to receive search commands of the electronic communication device 102, finds out, according to the search commands, a location of the data to be downloaded, and sends it to the electronic communication device 102. Moreover, the search service module 302 can establish database index according to the data sent from the electronic communication device 102.

The account number management module 304 is used to manage the detailed data, such as account numbers, passwords, names, addresses, telephone numbers, e-mail addresses etc., and confirm authorized extend of the user.

The message system module 306 is used to receive the data that is inputted, send the data to the computer 112, filter the data according to a set up set by the user, and send a notification to the electronic communication device 102.

The file system module 308 is used to store a plurality of data into the storage media.

The communication contact module 310 is used to store data of a plurality of contact persons, for example, names, addresses, telephone numbers, e-mail addresses.

The calendar module 312 is used to store a plurality of notes and memos of the user.

The operation system module 314 is used to store an operation system that can make the message box 110 operate and execute.

In the preferred embodiment of the present invention, the message box 110 further includes a wireless network access point module (not shown) that can access in a wireless manner, and a network router module (not shown) that can be a network router.

In the preferred embodiment, the message box 110 is originally provided with a unique internet protocol address, a unique telephone number, or a unique domain name address, and such a unique data is stored into a media server that is installed by a manufacturer who manufactures the message box 110. Every time the gateway 108 is connected to the Internet 104, then the message box 110 will automatically register a present Internet protocol address (IP address) into the media server, if the gateway 108 uses a floating IP address. The electronic communication device 102 is first connected to the media server, then finds out the present IP address of the message box 110 through such a unique internet protocol address, a unique telephone number, or a unique domain name address, and then is connected to the message box 110 through the internet 104. After the connection, the electronic communication device 102 can transmit a request signal to the message box 110, in order to access data and search for data, the steps of which will be further explained as follows:

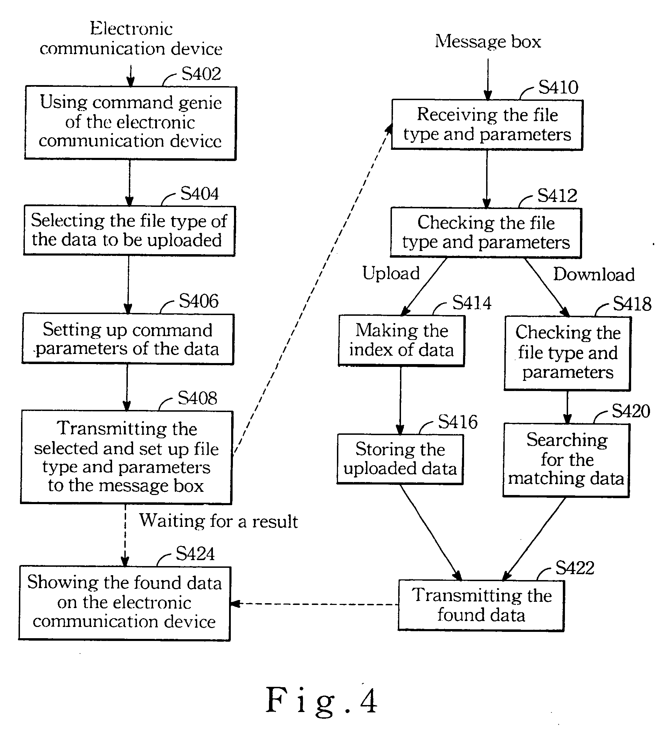

Please refer to Fig.4, which shows a flow chart of the method for searching data of the present invention, wherein the steps of uploading and download data are shown.

In the preferred embodiment, downloading data from the gateway 108 comprises the steps of: a command genie of the electronic communication device 102 being used to transmit various commands to the message box 110, after the electronic communication device 102 is connected to the gateway 102 (s402); selecting the file type, such as MP3, DOC file, PPT file etc. of the data to be download (s404); and then setting up command parameters of the data to be download (s406), wherein the parameters can be for example, size of data, metadata, key words, dates, subjects, authors, access dates etc., but are not limited thereof; and the electronic communication device 102 transmitting the selected and set up file type and parameters to the message box 110 (s408); the message box 110 checking the file type and the parameters to determine where the data to be download is (s412), after the message 110 receiving the file type and parameters (s410); checking the file type and parameters (s418); searching, according to a position that is recorded in the index, for the data that matches with the file type and parameters in the storage media (s420); the message box 110 transmitting the found data to the electronic communication device 102 (s422), and the found data being shown on the electronic communication device 102(s424).

When uploading the data to the gateway 108, after the electronic device 102 is connected to the gateway 108, i.e., the message box, then the command genie of the electronic communication device 102 is used to transmit various commands to the message box (s402); selecting the file type, for example MP3, DOC file, PPT file, of the data to be uploaded (s404), wherein it can be designed not to select the file type of the data to be uploaded, but is judged by the gateway 108, and then is stored into the store media.

The command parameters of the data to be uploaded can be further set up, wherein the parameters can be size of data, metadata, keywords, dates, subjects, authors, or access date etc., but are not limited thereof. The electronic communication device 102 can send the selected and set up file types and parameters to the message box 110(408). After the message box 110 receives the file types and the parameters, the message box 110 checks the file types and the parameters, and determines, according to the file types and the parameters, the database to be uploaded (s421). The index of the data to be uploaded is made according to the parameters and the file types (s414). The uploaded data is stored into the store media (s416).

After the storage, the message box 110 transmits the storage result to the electronic communication device 102(s422), and the storage result is shown on the electronic communication device 102(s424).

Please refer to Fig.5, which shows a flowchart of the method for searching data of the present invention, wherein the electronic communication device 102 can search for the data in the Internet through the message box 110.

In the preferred embodiment, as aforesaid mentioned, after the electronic communication device 102 is connected to the gateway 108, i.e., the message box 110, the command genie of the electronic communication device 102 can transmit various commands to the message box 110 (s502).

The file types, for example MP3, DOC file, PPT file, of the data to be searched are selected (s504), and the command parameters of the data to be download are further set up (s506), wherein the command parameters can be, for example data size, metadata, keywords, date, subjects, authors, or access date, but are not limited thereto. The electronic communication device 102 transmits the selected and set up file types and parameters to the message box 110(s508).

After the message box 110 receives the file type and parameters (s510), the file types and the parameters are checked (s512). Make a search in the internet through a pre-set inlet website and search engine (s514), wherein the inlet website and the search engine can be Yahoo, Sina, PChome, Yam or Google etc, but are not limited thereto..

After searching the data in the internet, because the searching is through many inlet websites and search engines, the message box 110 filters out the data that is the same or that is not very matched (s516).

After the filtering, the message box 110 transmits a filtered result to the electronic communication device 102 (s518), and the filtered result is shown on the electronic communication device (s520).

## Claims

1. A method for accessing data, which method is for accessing data to a plurality of storage medias through an electronic communication device (102), the storage medias being electrically connected to a gateway (108) (108), the method **characterized by** the steps of:
the electronic communication device (102) being connected to the gateway (108) (108) in a wireless manner;
the electronic communication device (102) selecting a file type of the data to be accessed;
the electronic communication device (102) sending the file type to the gateway (108);
the gateway (108) searching, according to the file type, for the data in the storage media, which data matches with data to be accessed; and
the gateway (108) sending the matching data to the electronic communication device 102.

2. The method according to claim 1, **characterized by** the steps of the electronic communication device (102) selecting a file type of the data to be accessed includes that when reading the data, the file type of the data is selected.

3. The method according to claim 1, further **characterized by** the steps of:
selecting the file type through the electronic communication device (102);
the electronic communication device (102) sending the data and the file type to the gateway (108);
the gateway (108) selecting, according to the file type, one of the storage medias, which stores the data, and renewing a data index;
the gateway (108) storing the data into one of the storage medias, which stores the data; and
the gateway (108) sending the storing results to the electronic communication device (102).

4. The method according to claim 1, **characterized by** using a GPRS to make the electronic communication device (102) connect to the gateway (108) includes the steps of:
the electronic communication device (102) being connected to a media server through an internet;
the electronic communication device (102) downloading a present IP address of the gateway (108) from the media server; and
the electronic communication device (102) being connected to the gateway (108) according to the present IP address.

5. A method for searching data, which method is used to search for data in an Internet through an electronic communication device (102), the method **characterized by** the steps of:
the electronic communication device (102) being connected to a gateway (108) in a wireless manner;
the electronic communication device (102) selecting a file type of the data to be searched;
the electronic communication device (102) sending the file type to the gateway (108);
the gateway (108) searching, according to the file type, for relating data in the Internet; and
the gateway (108) sending the relating data to the electronic communication device (102).

6. The method according to claim 5, **characterized by** the step of the gateway (108) sending the relating data to the electronic communication device (102) includes matching and filtering out the relating data that is searched.

7. The method according to claim 5, **characterized by** the steps of selecting the file type through the electronic communication device (102) includes the steps of setting up at least one of a plurality of parameters of the data.

8. A message box (110) which is connected to an internet through a modem, **characterized by**:
a data system module which is used to receive, send and filter a plurality of data, and sends the data to an electronic communication device (102);
a file system module (308), which is used to store the plurality of data into the storage media;
an account number management module (304) which is used to store a plurality of account passwords to judge grade of the authorized right of the user that is connected to the message box (110); and
a search service module (302) which is used to receive, access and search, according to a command of the electronic communication device (102), in the internet through the file system module (308).

9. The message box (110) according to claim 8, further **characterized by**:
a communication contact module (310), which has data of a plurality of contact persons;
a calendar module (312) which is used to store a plurality of notes of the user; and
an operation system which is used to store and execute the operation system that makes the message box (110) operate.

10. The message box (110) according to claim 8, further **characterized by**:
a wireless network access point module, which accesses in a wireless manner; and
a network router module, which is used as a network router.
